(19) Europäisches Patentamt
European Patent Office
Office européen des brevets

(11) EP 3 595 160 A1

(12) **EUROPEAN PATENT APPLICATION**
published in accordance with Art. 153(4) EPC

(43) Date of publication:
**15.01.2020 Bulletin 2020/03**

(51) Int Cl.:
*H02M 7/48* (2007.01)        *B62D 5/04* (2006.01)
*B62D 6/00* (2006.01)

(21) Application number: **19778416.8**

(22) Date of filing: **26.03.2019**

(86) International application number:
**PCT/JP2019/012826**

(87) International publication number:
**WO 2019/198496 (17.10.2019 Gazette 2019/42)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **12.04.2018  JP 2018077033**

(71) Applicant: **NSK Ltd.**
**Tokyo 141-8560 (JP)**

(72) Inventors:
• **NAKAYAMA, Sachio**
  **Maebashi-shi, Gunma 371-8527 (JP)**
• **HOSHI, Yuzuru**
  **Maebashi-shi, Gunma 371-8527 (JP)**

(74) Representative: **Rings, Rolf**
**Klingseisen, Rings & Partner**
**Patentanwälte**
**Postfach 10 15 61**
**80089 München (DE)**

(54) **CURRENT DETECTION DEVICE AND ELECTRIC POWER STEERING DEVICE**

(57)    A current detection device (120) including: a current detection unit (200) configured to, on a basis of respective voltage drops of resistance elements (RS1 to RS3) connected in series to lower arm elements of respective phases of a PWM-controlled multiphase inverter (104), detect respective current values of the respective phases; a sum calculation unit (201) configured to calculate an all phase sum of current detection values detected by the current detection unit; a maximum duty phase determination unit (203) configured to determine a phase whose upper arm element is driven at a maximum duty ratio; an output switching unit (204) configured to, when the all phase sum of the current detection values has been determined to be equal to or more than a threshold value, switch a value to be output as a current detection value of a lower arm of the phase whose upper arm element is driven at the maximum duty ratio to a value obtained by inverting a sign of a sum of the current detection values detected in remaining phases by the current detection unit (200); and a threshold value determination unit configured to determine the threshold value in accordance with the all phase sum of the current detection values detected at duty ratios where current detection by the current detection unit is possible.

FIG. 4

EP 3 595 160 A1

**Description**

Technical Field

The present invention relates to a current detection device and an electric power steering device.

Background Art

A three-phase downstream shunt system is known as means for detecting currents flowing through respective phases of a pulse width modulation (PWM)-controlled multiphase inverter (e.g. PTL 1 below).
The three-phase downstream shunt system detects respective current values of the respective phases on the basis of respective voltage drops of shunt resistors connected in series to lower arm elements.

Citation List

Patent Literature

PTL 1: JP PAT. No. 3674578

Summary of Invention

Technical Problem

In the three-phase downstream shunt system, phase current flows for a short time in the shunt resistor of a phase whose lower arm element has a small duty ratio. As a result, accurate current detection of the phase has sometimes been impossible.
Thus, a current detection device of PTL 1 switches a value to be employed as a current value of a predetermined phase between a first current value that is a voltage drop value of a current detection resistance element of the predetermined phase and a second current value that is a value obtained by inverting a sign of a sum of voltage drops of current detection resistance elements of the remaining two phases, depending on whether or not the duty ratio of a lower arm element of the predetermined phase is equal to or more than a small value less than 30%.
However, when evenly switching the current detection value on the basis of the duty ratio, it is necessary to set a switching threshold value with margin so as to ensure current detection by the shunt resistors in a region of duty ratio larger than the switching threshold value.
Due to this, an excessively large threshold value may be set, whereby switching may be executed more than necessary. As a result, there have been cases where fluctuation in the current detection value due to the switching generates vibration and noise.
The present invention has been made in view of the above problem. It is an object of the present invention to reduce vibration and noise in a three-phase downstream shunt system by setting, to an appropriate value, a threshold value for switching a value obtained as a current detection value between a current value detected on the basis of a voltage drop of a resistance element connected in series to a lower arm element and a value obtained by inverting a sign of a sum of current values detected in the remaining phases.

Solution to Problem

In order to solve the above problem, according to an aspect of the present invention, there is provided a current detection device including: a current detection unit configured to, on a basis of respective voltage drops of resistance elements connected in series to lower arm elements of respective phases of a PWM-controlled multiphase inverter, detect respective current values of the respective phases; a sum calculation unit configured to calculate an all phase sum of current detection values detected by the current detection unit; a maximum duty phase determination unit configured to determine a phase whose upper arm element is driven at a maximum duty ratio; an output switching unit configured to, when the all phase sum of the current detection values has been determined to be equal to or more than a threshold value, switch a value to be output as a current detection value of a lower arm of the phase whose upper arm element is driven at the maximum duty ratio to a value obtained by inverting a sign of a sum of the current detection values detected in remaining phases by the current detection unit; and a threshold value determination unit configured to determine the threshold value in accordance with the all phase sum of the current detection values detected at duty ratios where current detection by the current detection unit is possible.
According to another aspect of the present invention, there is provided an electric power steering device including: the current detection device described above; a multiphase motor; and a multiphase inverter configured to drive the multiphase motor, the multiphase inverter being controlled in accordance with current detection values flowing through the lower arm elements of the multiphase inverter detected by the current detection device.

Advantageous Effects of Invention

According to the present invention, it is possible to reduce vibration and noise in a three-phase downstream shunt system by setting, to an appropriate value, a threshold value for switching a value obtained as a current detection value between a current value detected on the basis of a voltage drop of a resistance element connected in series to a lower arm element and a value obtained by inverting a sign of a sum of current values detected in the remaining phases.

Brief Description of Drawings

FIG. 1 is a structural diagram schematically illustrating one example of an electric power steering device of an embodiment;
FIG. 2 is a block diagram illustrating one example of a functional structure of a controller of FIG. 1;
FIG. 3 is a circuit structure diagram of one example of an inverter of FIG. 2;
FIG. 4 is a block diagram illustrating one example of a functional structure of a current detection device of a first embodiment;
FIG. 5 is a block diagram illustrating one example of a functional structure of a threshold value determination unit of FIG. 4;
FIG. 6 is a diagram describing one example of operation of an output switching unit;
FIG. 7 is a flowchart describing one example of threshold value determination processing of the first embodiment;
FIG. 8 is a flowchart describing one example of current detection processing of the first embodiment;
FIG. 9 is a block diagram illustrating one example of a functional structure of a current detection device of a second embodiment;
FIGS. 10A to 10C, respectively, are diagrams describing each example where a threshold value is set in accordance with a maximum duty ratio;
FIG. 11 is a flowchart describing one example of current detection processing of the second embodiment;
FIG. 12 is a block diagram illustrating one example of a functional structure of a current detection device of a third embodiment;
FIG. 13 is a diagram describing an example of threshold value correction in accordance with a maximum duty ratio; and
FIG. 14 is a flowchart describing one example of current detection processing of the third embodiment.

Description of Embodiments

Now, with reference to the accompanying drawings, embodiments according to the present invention will be described in detail.

In addition, the embodiments, which will be described below, indicate devices and methods to embody the technical idea of the present invention, and the technical idea of the present invention does not limit the constitutions, arrangements, and the like of the constituent components to those described below. The technical idea of the present invention can be subjected to a variety of alterations within the technical scope prescribed by the claims.

(First Embodiment)

(Structure)

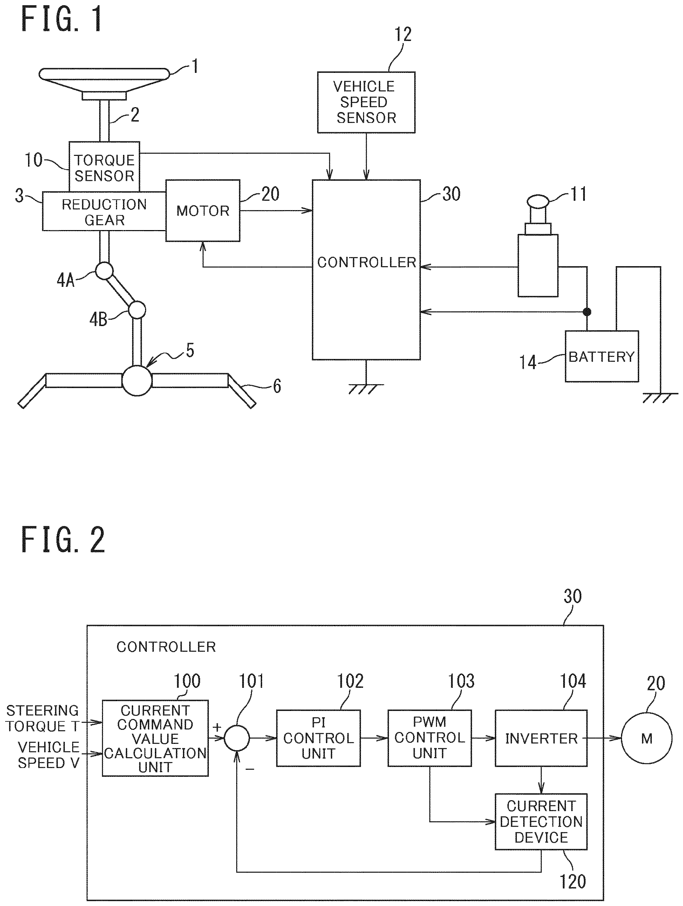

Reference will be made to FIG. 1. The following description will be given of a case where, in an electric power steering device, a current detection device of an embodiment of the present invention detects phase currents of a multiphase inverter configured to drive a multiphase motor configured to generate a steering assist force. However, the current detection device of the embodiment of the present invention is not limited thereto, and can be applied to various current detection devices configured to detect phase currents of a multiphase inverter.

A column shaft 2 of a steering wheel 1 is connected to tie rods 6 of steered wheels via a reduction gear 3, universal joints 4A and 4B, and a pinion rack mechanism 5. The column shaft 2 is provided with a torque sensor 10 configured to detect a steering torque of the steering wheel 1, and a motor 20 configured to assist a steering force of the steering wheel 1 is connected to the column shaft 2 via the reduction gear 3.

A controller 30 is an electronic circuit, such as an electronic control unit, which is configured to control the electric power steering device. Electric power from a battery 14 is supplied to the controller 30, and an ignition signal from an ignition key 11 is input to the controller 30.

The controller 30 may include a computer including a processor and peripheral components such as a storage device. The processor may be, for example, a central processing unit (CPU) or a micro-processing unit (MPU).

The storage device may include any of a semiconductor storage device, a magnetic storage device, and an optical storage device. The storage device may include memories such as a register, a cache memory, and a read only memory (ROM) and a random access memory (RAM) used as main storage devices .

Note that the controller 30 may be formed by including an exclusive hardware configured to execute each piece of information processing that will be described below.

For example, the controller 30 may include a functional logic circuit set in a general-purpose semiconductor integrated circuit. For example, the controller 30 may include a programmable logic device (PLD) such as a field-programmable gate array (FPGA), or the like.

The controller 30 performs calculation of a steering assist command value of an assist command by using an assist map or the like on the basis of a steering torque T detected by the torque sensor 10 and a vehicle speed V detected by the vehicle speed sensor 12, and controls a current to be supplied to the motor 20 on the basis of the calculated steering assist command value . The motor 20 will be described by exemplifying a three-phase motor, which is commonly often used.

Reference will be made to FIG. 2. The controller 30 includes a current command value calculation unit 100, a subtraction unit 101, a proportional-integral (PI) control unit 102, a PWM control unit 103, an inverter 104, and a current detection device 120.

The controller 30 may cause the processor to execute a computer program stored in, for example, a predetermined storage device to realize functions of the current command value calculation unit 100, the subtraction unit 101, the PI control unit 102, the PWM control unit 103, and the current detection device 120.

The current command value calculation unit 100 calculates a current command value Irf on the basis of the steering torque T from the torque sensor 10 and the vehicle speed V from the vehicle speed sensor 12.

The subtraction unit 101 calculates deviations between current command values Irf (IArf, IBrf, ICrf) calculated by the current command value calculation unit 100 and respective phase currents I (Ia, Ib, Ic) of the inverter 104 fed back from the current detection device 120, and outputs the calculated deviations to the PI control unit 102.

On the basis of the deviations calculated by the subtraction unit 101, the PI control unit 102 calculates voltage command values Vr (VAr, VBr, VCr) of three phases through PI control, and outputs them to the PWM control unit 103.

On the basis of the voltage command values Vr calculated by the PI control unit 102, the PWM control unit 103 calculates duty ratios Dua, Dub, and Duc of upper arm elements of phase A, phase B, and phase C of the inverter 104 and duty ratios Dla, Dlb, and Dlc of lower arm elements of phase A, phase B, and phase C, respectively. Note that the sum of the duty ratio Dua of the upper arm element and the duty ratio Dla of the lower arm element of phase A results in 100%. The same applies also to phases B and C.

The PWM control unit 103 generates gate signals for turning on and off the upper arm elements and the lower arm elements, respectively, of the inverter 104 at the calculated duty ratios Dua to Duc and Dla to Dlc.

The PWM control unit 103 outputs the generated gate signals to the inverter 104, and outputs the duty ratios Dua, Dub, and Duc of the upper arm elements to the current detection device 120.

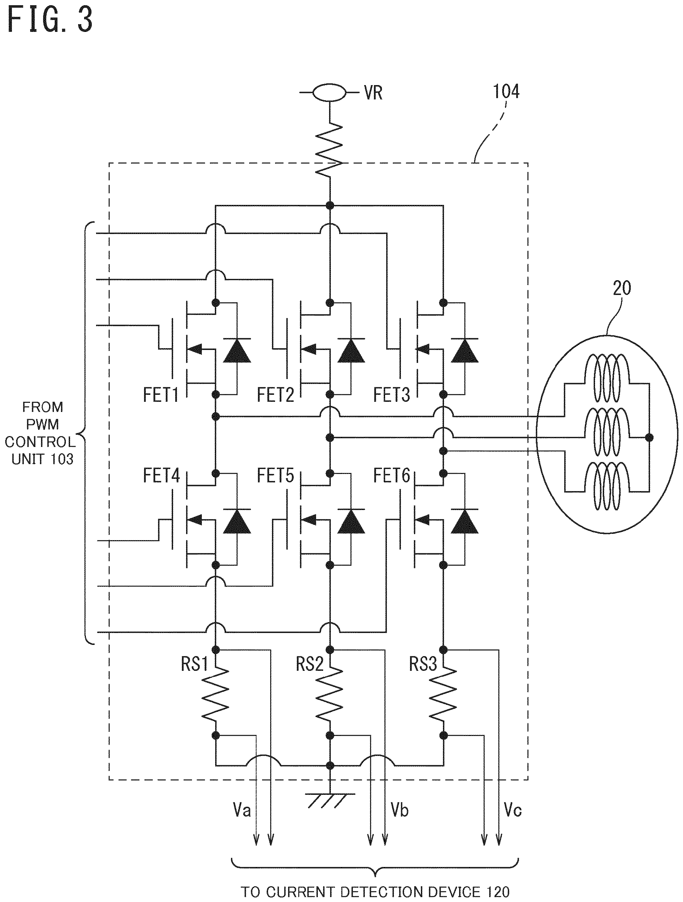

Reference will be made to FIG. 3. The inverter 104, which is a three-phase inverter, includes a three-phase bridge connected between a positive electrode-side line which is connected to a direct current power supply VR and to which direct current power is supplied and a ground line. The three-phase bridge includes upper arm FET1 to FET3 that are the upper arm elements of phases A to C and lower arm FET4 to FET6 that are the lower arm elements of phases A to C. The FET1 to FET6, respectively, are turned on and off by the gate signals with the duty ratios Dua to Duc and Dla to Dlc to drive the motor 20, which is the three-phase motor.

Resistance elements RS1 to RS3 are connected in series between the lower arm FET4 to FET6 of phases A to C and the ground line. The resistance elements RS1 to RS3 are used as shunt resistors in a three-phase downstream shunt system. Voltage drops Va, Vb, and Vc of the resistance elements RS1 to RS3 are input to the current detection device 120.

Reference will be made to FIG. 2. On the basis of the input voltage drops Va, Vb, and Vc, the current detection device 120 determines phase currents I (Ia, Ib, Ic), and feeds back the determined phase currents I to the subtraction unit 101.

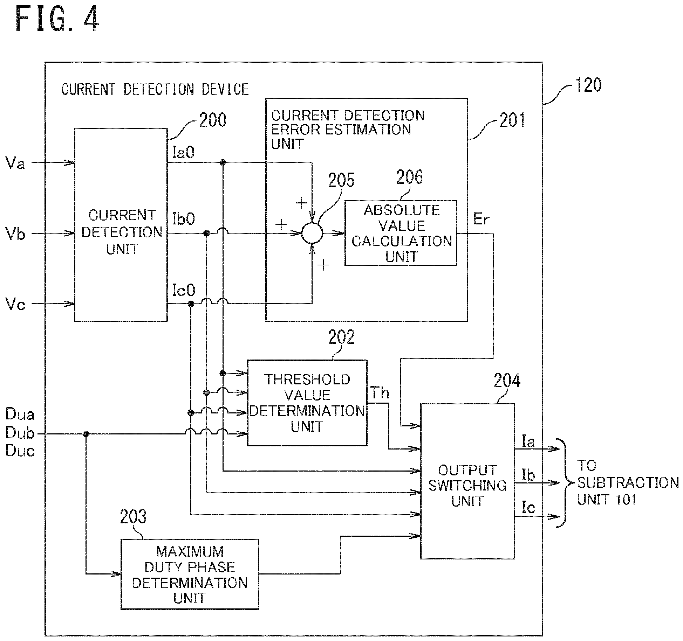

Reference will be made to FIG. 4. The current detection device 120 of the first embodiment includes a current detection unit 200, a current detection error estimation unit 201, a threshold value determination unit 202, a maximum duty phase determination unit 203, and an output switching unit 204.

On the basis of the voltage drops Va, Vb, and Vc of the resistance elements RS1 to RS3 input from the inverter 104, the current detection unit 200 detects, as current detection values, respective currents Ia0, Ib0, and Ic0 flowing through the resistance elements RS1 to RS3 according to the following formulae (1):

$$Ia0 = Va/RSS1$$

$$Ib0 = Vb/RSS2$$

$$Ic0 = Vc/RSS3 \ldots (1)$$

Here, RSS1, RSS2, and RSS3, respectively, represent resistance values of the resistance elements RS1, RS2, and RS3.

According to the Kirchhoff's law, a sum (Ia0 + Ib0 + Ic0) of all the phases of the current detection values Ia0 to Ic0 is theoretically 0 (zero). Therefore, when the all phase sum of the current detection values Ia0 to Ic0 is not 0, it can be considered that a current detection error has occurred because the duty ratio of any of the lower arm elements is excessively small, and phase current flows for a short time in any of the resistance elements RS1 to RS3.

Due to that, the current detection error estimation unit 201 calculates the all phase sum of the current detection values Ia0 to Ic0 to estimate the calculated sum as a current detection error Er. The current detection error estimation unit 201 is one example of a sum calculation unit.

The current detection error estimation unit 201 includes an addition unit 205 configured to calculate the all phase sum of the current detection values Ia0 to Ic0 and an absolute value calculation unit 206 configured to calculate an absolute value of the sum calculated by the addition unit 205 and output as the current detection error Er.

The current detection error estimation unit 201 outputs the calculated current detection error Er to the output switching unit 204.

Furthermore, a phase where the duty ratio of the lower arm element is excessively small seems to be a phase among phases A to C, where the duty ratio of the upper arm element is maximum (i.e., a phase whose upper arm element is driven at a maximum duty ratio among the duty ratios of phases A to C).

Thus, the maximum duty phase determination unit 203 determines, among phases A to C, a phase where the duty ratio of the upper arm element is maximum (hereinafter may be referred to as "maximum duty phase"). The maximum duty phase determination unit 203 outputs the determined maximum duty phase to the output switching unit 204.

The threshold value determination unit 202 determines a threshold value Th for determining whether the current detection error Er is excessively large or not, and outputs it to the output switching unit 204.

Now, a duty ratio region that allows the current detection unit 200 to detect phase currents is referred to as "detectable region". Even when current values of respective phases are detected by the current detection unit 200 during a period where the duty ratios in all the phases are in the detectable region, and the all phase sum of the current detection values is calculated, the sum is actually not 0 (zero) due to various factors.

Accordingly, to determine whether the current detection error Er due to the excessively small duty ratio of any of the lower arm elements is excessively large or not, it is preferable to avoid influence of errors due to factors other than that.

Thus, the threshold value determination unit 202 of the first embodiment determines the threshold value Th in accordance with the all phase sum of the current detection values detected by the current detection unit 200 during the period where the duty ratios of all the phases are in the detectable region. For example, the threshold value determination unit 202 may determine, as the threshold value Th, a sum obtained by adding an allowable error Ea to the sum of such current detection values.

The threshold value determination unit 202 may update the threshold value Th in real time (i.e., every time the current detection device 120 detects the respective phase currents I of the inverter 104). Alternatively, the threshold value determination unit 202 may output a predetermined initial value as the threshold value Th at the time of shipping from factory, and then may update the threshold value Th in a predetermined cycle (e.g., a day, a month, a few months, or the like).

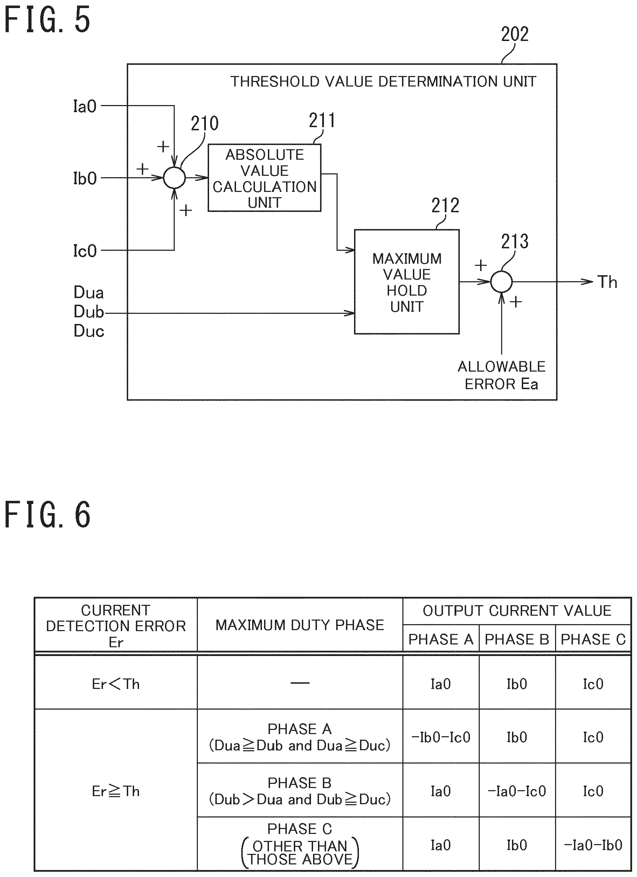

Reference will be made to FIG. 5. For example, the threshold value determination unit 202 of the first embodiment includes addition units 210 and 213, an absolute value calculation unit 211, and a maximum value hold unit 212.

The addition unit 210 calculates the all phase sum of the current detection values Ia0 to Ic0 detected by the current detection unit 200. The absolute value calculation unit 211 calculates an absolute value of the all phase sum of the current detection values Ia0 to Ic0, and outputs it to the maximum value hold unit 212.

On the basis of the duty ratios Dua to Duc of the upper arm elements input from the inverter 104, the maximum value hold unit 212 determines whether or not the duty ratios of the lower arm elements are in the detectable region.

The detectable region may be, for example, a region where the duty ratios of the lower arm elements are equal to or more than 10% (i.e., a region where the duty ratios of the upper arm elements are equal to or less than 90%), and may be preferably a region where the duty ratios of the lower arm elements are equal to or more than 20% (i.e., a region where the duty ratios of the upper arm elements are equal to or less than 80%).

The maximum value hold unit 212 takes out a maximum value in a predetermined period from among absolute values of the sums of current detection values Ia0 to Ic0 detected during the period where the duty ratios of the lower arm elements are in the detectable region, and then outputs it to the addition unit 213.

The addition unit 213 adds the allowable error Ea to the maximum value input from the maximum value hold unit 212 to calculate a sum as the threshold value Th.

Here, the predetermined period in which the maximum value hold unit 212 takes out the maximum value of the sums may be, for example, several tens of milliseconds.

Alternatively, the predetermined period may be determined in accordance with a phase current cycle when the motor 20 rotates at a predetermined rotation velocity. For example, the predetermined period may be determined so as to enable a maximum value to be detected from among absolute values of sums of the current detection values Ia0 to Ic0 calculated over at least one phase current cycle. The predetermined period may be dynamically varied in accordance with the rotation velocity of the motor 20.

For example, even when an error in the current detection values that occurs during the period where the duty ratios are in the detectable region (i.e., an error in the current detection values due to a factor other than an excessively small duty ratio of any of the lower arm elements) fluctuates with phase current value changes (i.e., duty ratio changes), setting the predetermined period in the above-described manner enables the threshold value Th to be calculated in accordance with the maximum value of the error. It can thus be prevented that the threshold value Th is set excessively small.

Reference will be made to FIG. 4. The output switching unit 204 compares the current detection error Er input from the current detection error estimation unit 201 with the threshold value Th input from the threshold value determination unit 202 to determine whether or not a detection error has occurred because the current detection error Er is excessively large and the duty ratio of any of the lower arm elements is excessively small. In other words, the output switching unit 204 determines whether or not the current detection error Er is equal to or more than the threshold value Th. Note that the threshold value Th may be a previously determined fixed value. In this case, the threshold value determination unit 202 may be omitted.

When the current detection error Er is not equal to or more than the threshold value Th, the output switching unit 204 outputs the current detection values Ia0, Ib0, and Ic0 detected by the current detection unit 200 as the phase currents Ia, Ib, and Ic, respectively, (i.e., current detection values of the lower arms of phases A to C) of the inverter 104.

When the current detection error Er is equal to or more than the threshold value Th, the output switching unit 204 outputs, as a phase current of a maximum duty phase determined by the maximum duty phase determination unit 203 (i.e., a current detection value of the lower arm of the maximum duty phase), a value obtained by inverting the sign of a sum of current detection values detected in the other remaining phases by the current detection unit 200.

In other words, when the current detection error Er is equal to or more than the threshold value Th, the output switching unit 204 switches the value to be output as the phase current of the maximum duty phase to the value obtained by inverting the sign of the sum of the current detection values detected in the other remaining phases by the current detection unit 200.

Reference will be made to FIG. 6. When the current detection error Er is less than the threshold value Th, the output switching unit 204 outputs the current detection values Ia0, Ib0, and Ic0 detected by the current detection unit 200 as the phase currents Ia, Ib, and Ic, respectively, of the inverter 104.

When the current detection error Er is equal to or more than the threshold value Th and the maximum duty phase is phase A (i.e., when the duty ratios of the upper arms of phase A, phase B, and phase C are Dua, Dub, and Duc, respectively, and Dua ≥ Dub and Dua ≥ Duc), the output switching unit 204 outputs, as the phase current Ia of phase A, a value (-Ib0-Ic0) obtained by inverting the sign of a sum of the current detection values Ib0 and Ic0 of phases B and C. In addition, the output switching unit 204 outputs the current detection values Ib0 and Ic0 as the phase currents Ib and Ic, respectively.

When the current detection error Er is equal to or more than the threshold value Th and the maximum duty phase is phase B (when Dub > Dua, and Dub ≥ Duc), the output switching unit 204 outputs, as the phase current Ib of phase B, a value (-Ia0-Ic0) obtained by inverting the sign of a sum of the current detection values Ia0 and Ic0 of phases A and C. Additionally, the output switching unit 204 outputs the current detection values Ia0 and Ic0 as the phase currents Ia and Ic, respectively.

When the current detection error Er is equal to or more than the threshold value Th and the maximum duty phase is phase C (Duc > Dua, and Duc > Dub), the output switching unit 204 outputs, as the phase current Ic of phase C, a value (-Ia0-Ib0) obtained by inverting the sign of a sum of the current detection values Ia0 and Ib0 of phases A and B. Additionally, the output switching unit 204 outputs the current detection values Ia0 and Ib0 as the phase currents Ia and Ib, respectively.

(Operation)

Next, a description will be given of operation of the current detection device 120 of the first embodiment.

(Threshold Value Determination Processing)

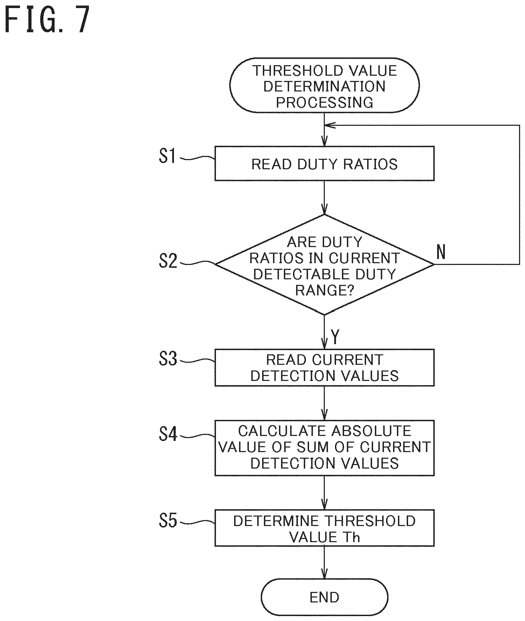

Threshold value determination processing for determining the threshold value Th by the threshold value determination unit 202 will be described with reference to FIG. 7. The threshold value determination processing may be executed whenever (i.e., in real time) the current detection device 120 detects the respective phase currents (Ia, Ib, Ic) of the inverter 104. Alternatively, the threshold value Th may be stored in a predetermined storage device, and then, the stored threshold value Th may be updated by executing the threshold value determination processing in a predetermined relatively long cycle (e.g., a day, a month, a few months, or the like).

At step S1, the maximum value hold unit 212 of the threshold value determination unit 202 reads the duty ratios Dua to Duc of the upper arm elements from the inverter 104.

At step S2, the maximum value hold unit 212 determines whether or not the duty ratios Dua to Duc are in a duty ratio range where phase current detection by the current detection unit 200 is possible. In other words, the maximum value hold unit 212 determines whether or not the duty ratios of the lower arm elements are in the detectable region.

When the duty ratios of all the phases are in the detectable region (step S2: Y), the processing proceeds to step S3. When the duty ratios of all the phases are not in the detectable region (step S2: N), the processing returns to step S1.

At step S3, the addition unit 210 reads the current detection values Ia0 to Ic0 detected by the current detection unit 200.

At step S4, the addition unit 210 and the absolute value calculation unit 211 calculate an absolute value of an all phase sum of the current detection values Ia0 to Ic0, and output it to the maximum value hold unit 212.

At step S5, the maximum value hold unit 212 detects a maximum value of absolute values of sums of the current detection values Ia0 to Ic0 in a predetermined period. The addition unit 213 calculates, as the threshold value Th, a sum obtained by adding the allowable error Ea to the maximum value detected by the maximum value hold unit 212.

(Current Detection Processing)

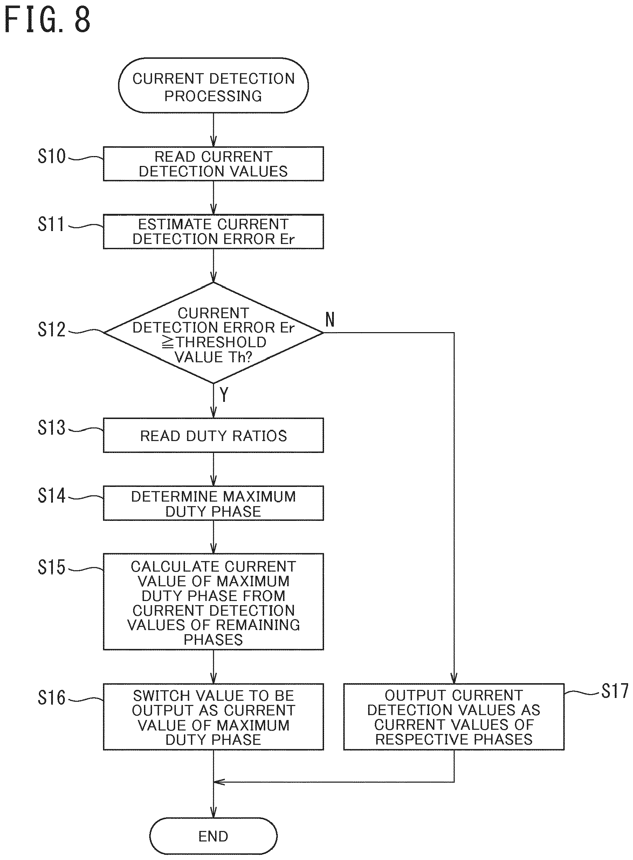

Next, current detection processing for detecting the respective phase currents I (Ia, Ib, Ic) of the inverter 104 by the current detection device 120 will be described with reference to FIG. 8.

At step S10, the current detection error estimation unit 201 reads the current detection values Ia0 to Ic0 detected by the current detection unit 200.

At step S11, the current detection error estimation unit 201 calculates an all phase sum of the current detection values Ia0 to Ic0 to estimate the calculated sum as the current detection error Er.

At step S12, the output switching unit 204 determines whether or not the current detection error Er estimated by the current detection error estimation unit 201 is equal to or more than the threshold value Th.

When the current detection error Er is equal to or more than the threshold value Th (step S12: Y), the processing proceeds to step S13. When the current detection error Er is not equal to or more than the threshold value Th (step S12: N), the processing proceeds to step S17.

At step S13, the maximum duty phase determination unit 203 reads the duty ratios Dua to Duc of the upper arm elements from the inverter 104.

At step S14, the maximum duty phase determination unit 203 determines a maximum duty phase (i.e., among phases A, B, and C, a phase where the duty ratio of the upper arm element is maximum).

At step S15, the output switching unit 204 calculates, as a current value of a phase current of the maximum duty phase, a value obtained by inverting the sign of a sum of current detection values detected by the current detection unit 200 in the remaining phases other than the maximum duty phase.

At step S16, the output switching unit 204 switches a value to be output as the current value of the maximum duty phase to the value obtained by inverting the sign of the sum of the current detection values of the remaining phases . Then, the current detection processing is ended.

On the other hand, when the current detection error Er is not equal to or more than the threshold value Th (step S12: N), the output switching unit 204 outputs, at step S17, the current detection values Ia0, Ib0, and Ic0, respectively, detected by the current detection unit 200 as phase currents of the respective phases. Then, the current detection processing is ended.

(Effects of First Embodiment)

(1) The current detection device 120 of the first embodiment includes the current detection unit 200 configured to detect current values of the respective phases, respectively, on the basis of respective voltage drops of the resistance elements RS1 to RS3 connected in series to the lower arm elements FET4 to FET6 of the respective phases of the inverter 104, which is the PWM-controlled three-phase inverter, the current detection error estimation unit 201 configured to calculate, as the current detection error Er, an all phase sum of current detection values detected by the current detection unit 200, the maximum duty phase determination unit 203 configured to determine a maximum duty phase whose upper arm element is driven at a maximum duty ratio, and the output switching unit 204 configured to, when the current detection error Er has been determined to be equal to or more than the threshold value Th, switch a value to be output as a current detection value of the lower arm of the maximum duty phase to a value obtained by inverting the sign of a sum of current detection values detected in the remaining phases by the current detection unit 200.

As described above, only when the current detection error Er is equal to or more than the threshold value Th, the value to be output as the current detection value of the lower arm of the maximum duty phase is switched. Thus, it can be avoided that the output switching unit 204 switches output of the current detection value in a duty ratio region where phase current detection by the current detection unit 200 is possible. By doing this, unnecessary switching of the current detection value is reduced, so that vibration and noise due to the switching can be reduced. As a result, vibration and noise due to the switching of the current detection value can be reduced.

(2) The current detection device 120 of the first embodiment includes the threshold value determination unit 202 configured to determine the threshold value Th in accordance with an all phase sum of the current detection values detected at duty ratios where current detection by the current detection unit 200 is possible.

In this manner, the threshold value Th can be determined so as to make it possible to avoid influence of errors in the current detection values due to factors other than an excessively small duty ratio of any of the lower arm elements .

(3) Additionally, the electric power steering device of the first embodiment includes the above-described current detection device 120, the motor 20 as the three-phase motor, and the inverter 104 as the three-phase inverter configured to drive the motor 20, and controls the inverter 104 in accordance with current detection values flowing through the lower arm elements FET4 to FET6 of the inverter 104 detected by the current detection device 120.

In this manner, vibration and noise generated in the motor 20 can be reduced.

(Second Embodiment)

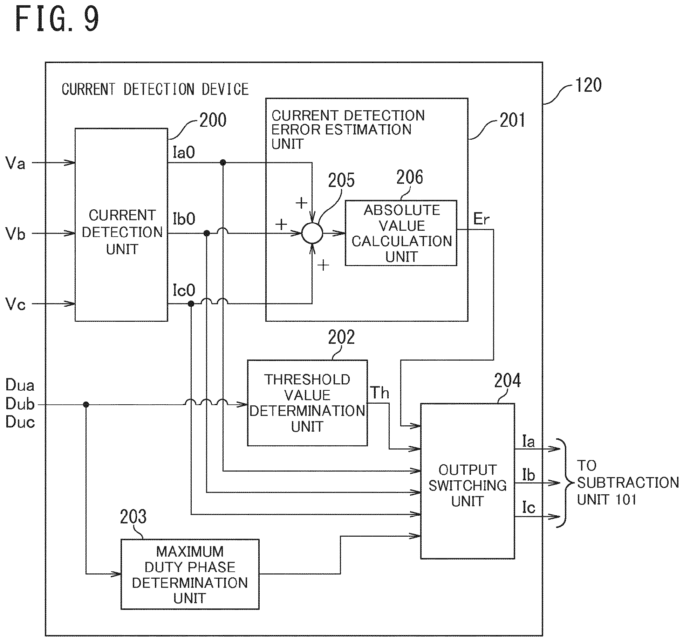

Next, a current detection device 120 of a second embodiment will be described with reference to FIG. 9. A threshold value determination unit 202 of the current detection device 120 of the second embodiment determines the threshold value Tr in accordance with a maximum value of duty ratios for driving the upper arm elements (hereinafter referred to as "maximum duty ratio"). Other components of the second embodiment are the same as the components of the first embodiment described with reference to FIG. 4.

The threshold value determination unit 202 reads the duty ratios Dua to Duc of the upper arm elements from the inverter 104. The threshold value determination unit 202 calculates maximum values Damax, Dbmax, and Dcmax, respectively, of the read duty ratios Dua to Duc of the respective phases. For example, the threshold value determination unit 202 may include a maximum value hold circuit configured to detect maximum values of the duty ratios in a period set longer than a phase current cycle.

The threshold value determination unit 202 selects, as a maximum duty ratio, any of the maximum values Damax, Dbmax, and Dcmax. For example, the threshold value determination unit 202 may select, as the maximum duty ratio, a largest value from among the maximum values Damax, Dbmax, and Dcmax.

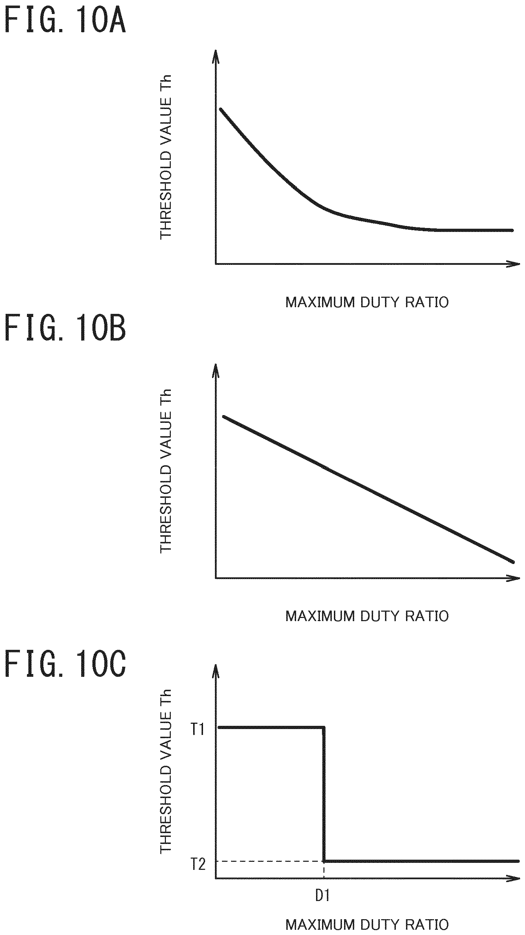

The threshold value determination unit 202 determines the threshold value Tr in accordance with the maximum duty ratio. Reference will be made to FIG. 10A. The threshold value determination unit 202 may determine the threshold value Th such that the threshold value Th increases as the maximum duty ratio decreases. In this manner, it can be avoided that the output switching unit 204 switches the current detection value in a duty ratio region where the duty ratio of the upper arm element is small (i.e., the duty ratio of the lower arm element is large), and phase current detection by the current detection unit 200 is possible.

For example, as illustrated in FIG. 10A, the threshold value determination unit 202 may determine the threshold value Th such that a ratio of an increased amount of the threshold value Th to a decreased amount of the maximum duty ratio increases as the maximum duty ratio decreases.

Alternatively, for example, as illustrated in FIG. 10B, the threshold value determination unit 202 may determine the threshold value Th such that the threshold value Th is proportional to the maximum duty ratio.

Alternatively, for example, as illustrated in FIG. 10C, the threshold value determination unit 202 may set a stepped threshold value Th such that the threshold value Th at a time when the maximum duty ratio is equal to or more than a predetermined value D1 is a relatively small threshold value T2, and the threshold value Th at a time when the maximum duty ratio is less than the predetermined value D1 is a threshold value T1 larger than the threshold value T2.

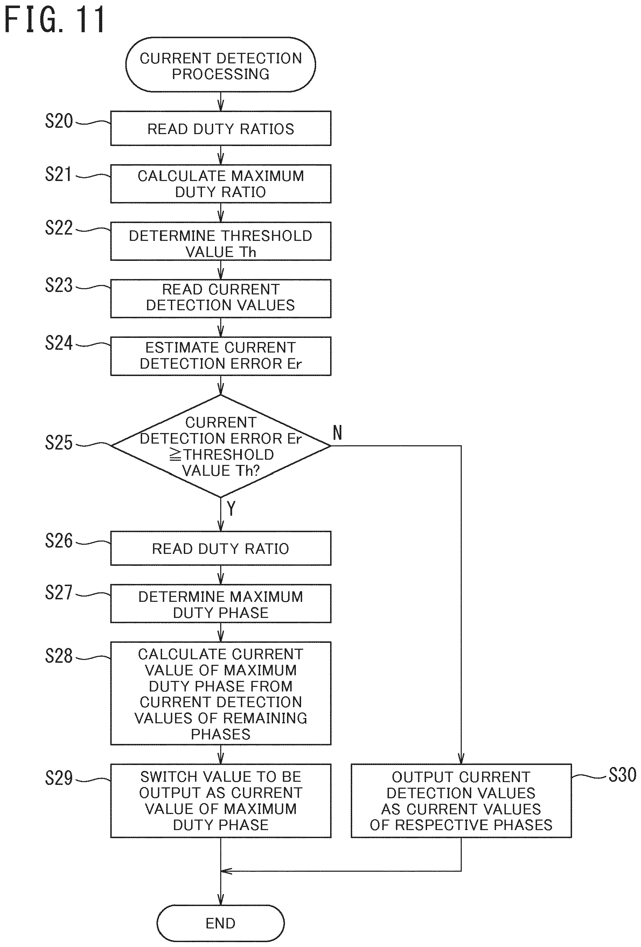

Next, current detection processing by the current detection device 120 of the second embodiment will be described with reference to FIG. 11.

At step S20, the threshold value determination unit 202 reads the duty ratios Dua to Duc of the upper arm elements from the inverter 104.

At step S21, the threshold value determination unit 202 calculates a maximum duty ratio.

At step S22, the threshold value determination unit 202 determines the threshold value Tr in accordance with the maximum duty ratio.

A series of processing at steps S23 to S30 is the same as that at steps S10 to S17 of FIG. 8.

(Effects of Second Embodiment)

The current detection device 120 of the second embodiment includes the threshold value determination unit 202 configured to determine the threshold value Th in accordance with the maximum duty ratio when driving the upper arm elements.

In this manner, it can be avoided that the output switching unit 204 switches the current detection value in a duty ratio region where phase current detection by the current detection unit 200 is possible.

(Third Embodiment)

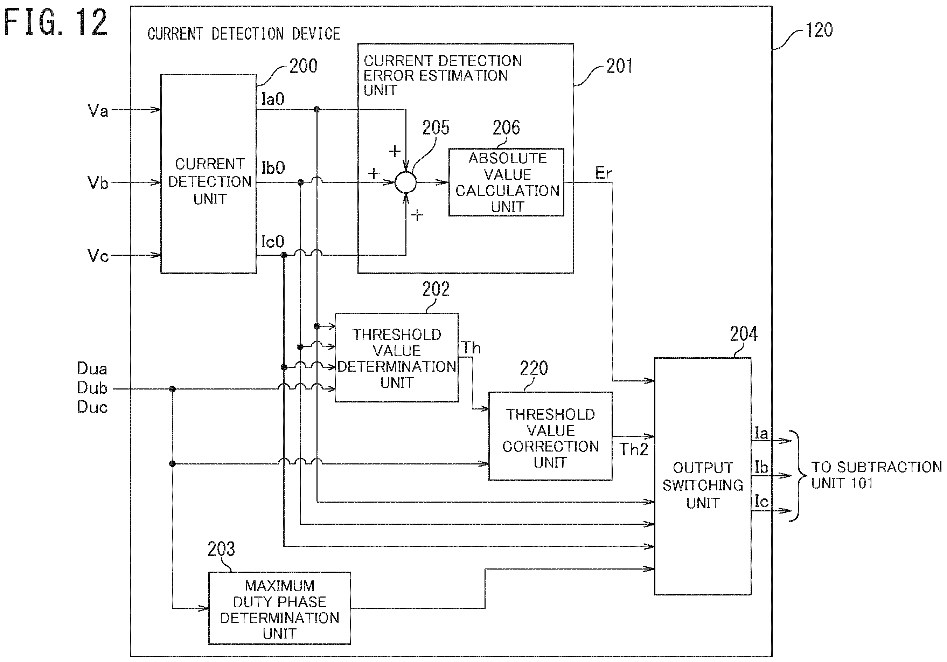

Next, a current detection device 120 of a third embodiment will be described with reference to FIG. 12. The current detection device 120 of the third embodiment includes a threshold value correction unit 220 configured to correct the threshold value Th determined by the threshold value determination unit 202 in accordance with the maximum duty ratio at which any of the upper arm elements is driven to obtain a corrected threshold value Th2, and output the corrected threshold value Th2 to the output switching unit 204.

For example, the threshold value correction unit 220 may correct the threshold value Th such that the corrected threshold value Th2 increases as a maximum duty ratio D decreases.

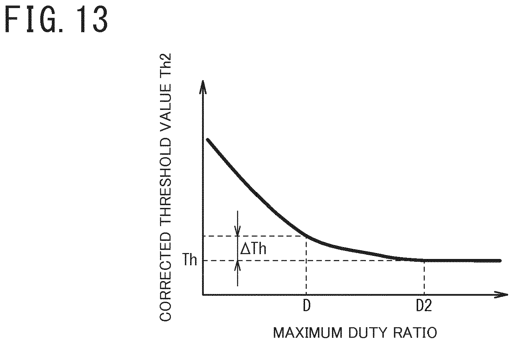

Reference will be made to FIG. 13. For example, when the maximum duty ratio D is equal to or more than a predetermined value D2, the threshold value correction unit 220 may output, as the corrected threshold value Th2, the threshold value Th detected by the threshold value determination unit 202, as it is, without correcting. When the maximum duty ratio D is less than the predetermined value D2, the threshold value correction unit 220 may correct the threshold value Th determined by the threshold value determination unit 202 so as to increase it, and output the corrected threshold value Th2 larger than the threshold value Th.

For example, when the maximum duty ratio D is less than the predetermined value D2, the threshold value determination unit 202 may calculate, as the corrected threshold value Th2, a sum obtained by adding the threshold value Th and a correction value ΔTh that increases as a difference (D2 - D) between the predetermined value D2 and the maximum duty ratio D increases.

For example, the threshold value determination unit 202 may increase a percentage of an increased amount of the correction value ΔTh to an increased amount of the difference (D2 - D) as the maximum duty ratio D decreases. The correction value ΔTh may be increased in proportion to the difference (D2 - D). Similarly to FIG. 10C, the correction value ΔTh may be changed in a stepped manner.

When the current detection error Er has been determined to be equal to or more than the corrected threshold value Th2, the output switching unit 204 switches a value to be output as a current detection value of the lower arm of a maximum duty phase to a value obtained by inverting the sign of a sum of current detection values detected in the remaining phases by the current detection unit 200.

Other components of the third embodiment are the same as the components of the first embodiment described with reference to FIG. 4.

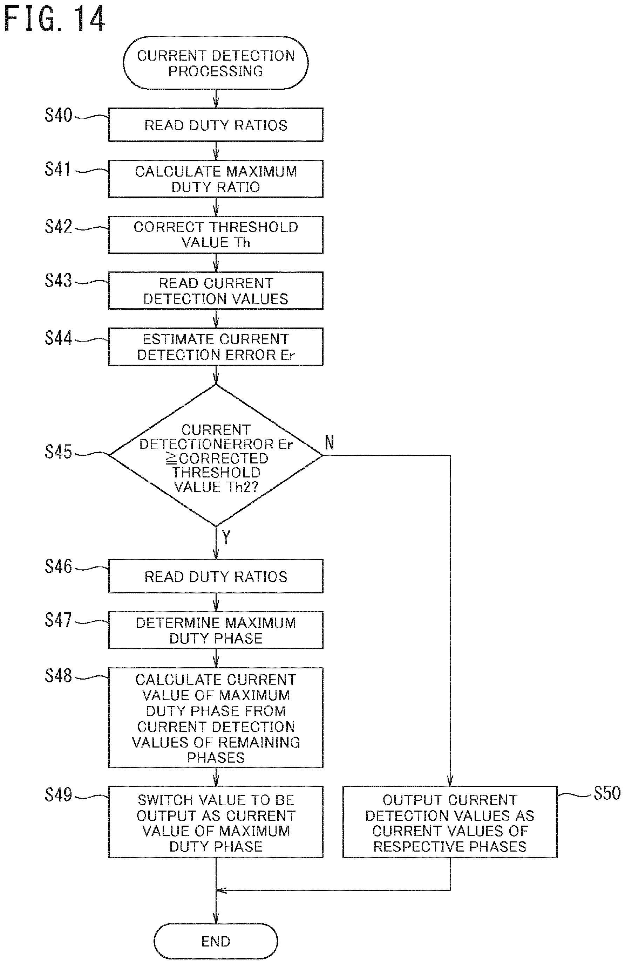

Next, current detection processing by the current detection device 120 of the second embodiment will be described with reference to FIG. 14.

At step S40, the threshold value correction unit 220 reads the duty ratios Dua to Duc of the upper arm elements from the inverter 104.

At step S41, the threshold value correction unit 220 calculates a maximum duty ratio.

At step S42, in accordance with the maximum duty ratio, the threshold value correction unit 220 corrects the threshold value Th determined by the threshold value determination unit 202 to obtain the corrected threshold value Th2. The threshold value correction unit 220 outputs the corrected threshold value Th2 to the output switching unit 204.

At step S43, the current detection error estimation unit 201 reads the current detection values Ia0 to Ic0 detected by the current detection unit 200.

At step S44, the current detection error estimation unit 201 calculates an all phase sum of the current detection values Ia0 to Ic0 to estimate the calculated sum as the current detection error Er.

At step S45, the output switching unit 204 determines whether or not the current detection error Er estimated by the current detection error estimation unit 201 is equal to or more than the corrected threshold value Th2.

When the current detection error Er is equal to or more than the corrected threshold value Th2 (step S45: Y), the processing proceeds to step S46. When the current detection error Er is not equal to or more than the corrected threshold value Th2 (step S45: N), the processing proceeds to step S50.

A series of processing at steps S46 to S50 is the same as that at steps S13 to S17 of FIG. 8.

(Effects of Third Embodiment)

The current detection device 120 of the third embodiment includes the threshold value correction unit 220 configured to correct the threshold value Th determined by the threshold value determination unit 202 in accordance with the maximum duty ratio when driving the upper arm elements.

In this manner, it can be avoided that the output switching unit 204 switches the current detection value in a duty ratio region where phase current detection by the current detection unit 200 is possible.

(Modifications)

While the inverters 104 in the first to third embodiments are the three-phase inverters, the present invention may be applied to current detection devices configured to detect phase currents of a multiphase inverter other than a three-phase inverter (e.g., a multiphase inverter having two phases, four phases, or more phases).

In the first to third embodiments, a maximum duty phase of the upper arm elements is determined to determine a phase whose current detection value is to be switched. However, by determining a phase where the duty ratio of the lower arm element is minimum, the current detection value may be switched in the phase where the duty ratio of the lower arm element is minimum.

In addition, the upper arm elements and the lower arm elements are not limited to field effect transistors (FETs), and may be other transistors, such as insulated-gate bipolar transistors (IGBTs), other kinds of bipolar transistors, or MOSFETs, as long as they satisfy performance requirements for driving the motor to be controlled, such as breakdown characteristics and current supply ability.

Reference Signs List

| | |
|---|---|
| 1: | Steering wheel |
| 2: | Column shaft |
| 3: | Reduction gear |
| 4A: | Universal joint |
| 4B: | Universal joint |
| 5: | Pinion rack mechanism |
| 6: | Tie rod |
| 10: | Torque sensor |
| 11: | Ignition key |
| 12: | Vehicle speed sensor |
| 14: | Battery |
| 20: | Motor |
| 30: | Controller |
| 100: | Current command value calculation unit |
| 101: | Subtraction unit |
| 102: | PI control unit |

| 103: | PWM control unit |
| 104: | Inverter |
| 120: | Current detection device |
| 200: | Current detection unit |
| 201: | Current detection error estimation unit |
| 202: | Threshold value determination unit |
| 203: | Maximum duty phase determination unit |
| 204: | Output switching unit |
| 205: | Addition unit |
| 206: | Absolute value calculation unit |
| 210: | Addition unit |
| 211: | Absolute value calculation unit |
| 212: | Maximum value hold unit |
| 213: | Addition unit |
| 220: | Threshold value correction unit |
| FET1 to FET3: | Upper arm element |
| FET4 to FET6: | Lower arm element |
| RS1 to RS3: | Resistance element |

**Claims**

1. A current detection device comprising:

   a current detection unit configured to, on a basis of respective voltage drops of resistance elements connected in series to lower arm elements of respective phases of a PWM-controlled multiphase inverter, detect respective current values of the respective phases;
   a sum calculation unit configured to calculate an all phase sum of current detection values detected by the current detection unit;
   a maximum duty phase determination unit configured to determine a phase whose upper arm element is driven at a maximum duty ratio;
   an output switching unit configured to, when the all phase sum of the current detection values has been determined to be equal to or more than a threshold value, switch a value to be output as a current detection value of a lower arm of the phase whose upper arm element is driven at the maximum duty ratio to a value obtained by inverting a sign of a sum of the current detection values detected in remaining phases by the current detection unit; and
   a threshold value determination unit configured to determine the threshold value in accordance with the all phase sum of the current detection values detected at duty ratios where current detection by the current detection unit is possible.

2. The current detection device according to claim 1, comprising a threshold value correction unit configured to correct the threshold value determined by the threshold value determination unit in accordance with a maximum duty ratio at which any of upper arm elements is driven.

3. A current detection device comprising:

   a current detection unit configured to, on a basis of respective voltage drops of resistance elements connected in series to lower arm elements of respective phases of a PWM-controlled multiphase inverter, detect respective current values of the respective phases;
   a sum calculation unit configured to calculate an all phase sum of current detection values detected by the current detection unit;
   a maximum duty phase determination unit configured to determine a phase whose upper arm element is driven at a maximum duty ratio;
   an output switching unit configured to, when the all phase sum of the current detection values has been determined to be equal to or more than a threshold value, switch a value to be output as a current detection value of a lower arm of the phase whose upper arm element is driven at the maximum duty ratio to a value obtained by inverting a sign of a sum of the current detection values detected in remaining phases by the current detection unit; and
   a threshold value determination unit configured to determine the threshold value in accordance with a maximum duty ratio at which any of upper arm elements is driven.

4. An electric power steering device comprising:

   the current detection device according to any one of claims 1 to 3;
   a multiphase motor; and
   a multiphase inverter configured to drive the multiphase motor,
   the multiphase inverter being controlled in accordance with current detection values flowing through the lower arm elements of the multiphase inverter detected by the current detection device.

# FIG. 1

# FIG. 2

# FIG. 3

VR

104

20

FROM
PWM
CONTROL
UNIT 103

FET1  FET2  FET3

FET4  FET5  FET6

RS1  RS2  RS3

Va  Vb  Vc

TO CURRENT DETECTION DEVICE 120

# FIG. 4

CURRENT DETECTION DEVICE                                    120

CURRENT DETECTION ERROR ESTIMATION UNIT    201

200

Va → CURRENT DETECTION UNIT

Ia0

Ib0

Ic0

205

206

+
+
+

ABSOLUTE VALUE CALCULATION UNIT    Er

Vb →

Vc →

202

THRESHOLD VALUE DETERMINATION UNIT    Th

204

Dua
Dub
Duc

OUTPUT SWITCHING UNIT    Ia
Ib
Ic

TO SUBTRACTION UNIT 101

203

MAXIMUM DUTY PHASE DETERMINATION UNIT

## FIG. 5

THRESHOLD VALUE DETERMINATION UNIT — 202

Ia0

Ib0

Ic0

210

211 ABSOLUTE VALUE CALCULATION UNIT

212 MAXIMUM VALUE HOLD UNIT

Dua
Dub
Duc

213

Th

ALLOWABLE ERROR Ea

## FIG. 6

| CURRENT DETECTION ERROR Er | MAXIMUM DUTY PHASE | OUTPUT CURRENT VALUE | | |
|---|---|---|---|---|
| | | PHASE A | PHASE B | PHASE C |
| Er < Th | — | Ia0 | Ib0 | Ic0 |
| Er ≧ Th | PHASE A (Dua ≧ Dub and Dua ≧ Duc) | −Ib0−Ic0 | Ib0 | Ic0 |
| | PHASE B (Dub > Dua and Dub ≧ Duc) | Ia0 | −Ia0−Ic0 | Ic0 |
| | PHASE C (OTHER THAN THOSE ABOVE) | Ia0 | Ib0 | −Ia0−Ib0 |

# FIG. 7

```
        ┌─────────────────────┐
        │  THRESHOLD VALUE    │
        │   DETERMINATION     │
        │    PROCESSING       │
        └─────────────────────┘
                  │
                  ▼
  S1     ┌─────────────────────┐
         │   READ DUTY RATIOS  │
         └─────────────────────┘
                  │
                  ▼
  S2        ╱ARE DUTY  ╲
          ╱RATIOS IN CURRENT╲    N
         ╱ DETECTABLE DUTY   ╲──────┐
          ╲    RANGE?       ╱       │
            ╲             ╱         │
                  │Y                │
                  ▼                 │
  S3     ┌─────────────────────┐   │
         │   READ CURRENT      │   │
         │  DETECTION VALUES   │   │
         └─────────────────────┘   │
                  │                 │
                  ▼                 │
  S4     ┌─────────────────────┐   │
         │ CALCULATE ABSOLUTE  │   │
         │ VALUE OF SUM OF CURRENT │
         │  DETECTION VALUES   │   │
         └─────────────────────┘   │
                  │                 │
                  ▼                 │
  S5     ┌─────────────────────┐   │
         │ DETERMINE THRESHOLD │   │
         │     VALUE Th        │   │
         └─────────────────────┘   │
                  │                 │
                  ▼                 │
         ┌─────────────────────┐   │
         │        END          │   │
         └─────────────────────┘   │
```

15

# FIG. 8

```
         ┌─────────────────────────┐
         │   CURRENT DETECTION     │
         │      PROCESSING         │
         └─────────────────────────┘
                     │
                     ▼
S10 ──────┌─────────────────────────┐
          │     READ CURRENT        │
          │   DETECTION VALUES      │
          └─────────────────────────┘
                     │
                     ▼
S11 ──────┌─────────────────────────┐
          │   ESTIMATE CURRENT      │
          │  DETECTION ERROR Er     │
          └─────────────────────────┘
                     │
                     ▼
S12 ──────◇─────────────────────────◇
          ╱      CURRENT        N    ╲──────────────────┐
          ╲  DETECTION ERROR Er     ╱                   │
          ╲    ≧THRESHOLD          ╱                    │
           ╲    VALUE Th?         ╱                     │
            ◇───────────────────◇                       │
                     │ Y                                │
                     ▼                                  │
S13 ──────┌─────────────────────────┐                  │
          │     READ DUTY RATIOS     │                  │
          └─────────────────────────┘                  │
                     │                                  │
                     ▼                                  │
S14 ──────┌─────────────────────────┐                  │
          │   DETERMINE MAXIMUM      │                  │
          │      DUTY PHASE          │                  │
          └─────────────────────────┘                  │
                     │                                  │
                     ▼                                  │
S15 ──────┌─────────────────────────┐                  │
          │   CALCULATE CURRENT      │                  │
          │   VALUE OF MAXIMUM       │                  │
          │    DUTY PHASE FROM       │                  │
          │   CURRENT DETECTION      │                  │
          │   VALUES OF REMAINING    │                  │
          │         PHASES           │                  │
          └─────────────────────────┘                  │
                     │                                  ▼
S16 ──────┌─────────────────────────┐      ┌─────────────────────────┐── S17
          │   SWITCH VALUE TO BE     │      │    OUTPUT CURRENT        │
          │  OUTPUT AS CURRENT       │      │  DETECTION VALUES AS     │
          │  VALUE OF MAXIMUM        │      │   CURRENT VALUES OF      │
          │      DUTY PHASE          │      │   RESPECTIVE PHASES      │
          └─────────────────────────┘      └─────────────────────────┘
                     │                                  │
                     ▼◄─────────────────────────────────┘
          ┌─────────────────────────┐
          │          END            │
          └─────────────────────────┘
```

# FIG. 9

CURRENT DETECTION DEVICE — 120

CURRENT DETECTION ERROR ESTIMATION UNIT — 201

200 — CURRENT DETECTION UNIT

Va →
Vb →
Vc →

Ia0
Ib0
Ic0

205

+
+
+

206 — ABSOLUTE VALUE CALCULATION UNIT — Er

202 — THRESHOLD VALUE DETERMINATION UNIT — Th

204 — OUTPUT SWITCHING UNIT

Dua
Dub
Duc

203 — MAXIMUM DUTY PHASE DETERMINATION UNIT

Ia
Ib
Ic

TO SUBTRACTION UNIT 101

## FIG. 10A

THRESHOLD VALUE Th

MAXIMUM DUTY RATIO

## FIG. 10B

THRESHOLD VALUE Th

MAXIMUM DUTY RATIO

## FIG. 10C

THRESHOLD VALUE Th

T1

T2

D1

MAXIMUM DUTY RATIO

# FIG. 11

CURRENT DETECTION
PROCESSING

S20 — READ DUTY RATIOS

S21 — CALCULATE MAXIMUM
DUTY RATIO

S22 — DETERMINE THRESHOLD
VALUE Th

S23 — READ CURRENT
DETECTION VALUES

S24 — ESTIMATE CURRENT
DETECTION ERROR Er

S25 — CURRENT
DETECTION ERROR Er
≧THRESHOLD
VALUE Th? —N

Y

S26 — READ DUTY RATIO

S27 — DETERMINE MAXIMUM
DUTY PHASE

S28 — CALCULATE CURRENT
VALUE OF MAXIMUM
DUTY PHASE FROM
CURRENT DETECTION
VALUES OF REMAINING
PHASES

S29 — SWITCH VALUE TO BE
OUTPUT AS CURRENT
VALUE OF MAXIMUM
DUTY PHASE

OUTPUT CURRENT
DETECTION VALUES
AS CURRENT VALUES
OF RESPECTIVE PHASES — S30

END

# FIG. 12

CURRENT DETECTION DEVICE — 120

Va, Vb, Vc → CURRENT DETECTION UNIT (200) → Ia0, Ib0, Ic0

CURRENT DETECTION ERROR ESTIMATION UNIT (201)
- 205: + + + summation
- 206: ABSOLUTE VALUE CALCULATION UNIT → Er

THRESHOLD VALUE DETERMINATION UNIT (202) → Th

THRESHOLD VALUE CORRECTION UNIT (220) → Th2

MAXIMUM DUTY PHASE DETERMINATION UNIT (203)

OUTPUT SWITCHING UNIT (204) → Ia, Ib, Ic → TO SUBTRACTION UNIT 101

Dua, Dub, Duc

EP 3 595 160 A1

FIG. 13

# FIG. 14

```
┌─────────────────────────┐
│   CURRENT DETECTION      │
│      PROCESSING          │
└─────────────────────────┘
             │
             ▼
S40 ── ┌─────────────────────────┐
       │   READ DUTY RATIOS       │
       └─────────────────────────┘
             │
             ▼
S41 ── ┌─────────────────────────┐
       │   CALCULATE MAXIMUM      │
       │      DUTY RATIO          │
       └─────────────────────────┘
             │
             ▼
S42 ── ┌─────────────────────────┐
       │   CORRECT THRESHOLD      │
       │       VALUE Th           │
       └─────────────────────────┘
             │
             ▼
S43 ── ┌─────────────────────────┐
       │    READ CURRENT          │
       │  DETECTION VALUES        │
       └─────────────────────────┘
             │
             ▼
S44 ── ┌─────────────────────────┐
       │   ESTIMATE CURRENT       │
       │  DETECTION ERROR Er      │
       └─────────────────────────┘
             │
             ▼
        CURRENT
S45 ── DETECTIONERROR Er      N
       ≧CORRECTED ─────────────────────┐
       THRESHOLD                       │
       VALUE Th2?                      │
             │ Y                       │
             ▼                         │
S46 ── ┌─────────────────────────┐     │
       │   READ DUTY RATIOS       │     │
       └─────────────────────────┘     │
             │                         │
             ▼                         │
S47 ── ┌─────────────────────────┐     │
       │   DETERMINE MAXIMUM      │     │
       │     DUTY PHASE           │     │
       └─────────────────────────┘     │
             │                         │
             ▼                         │
S48 ── ┌─────────────────────────┐     │
       │  CALCULATE CURRENT       │     │
       │  VALUE OF MAXIMUM        │     │
       │  DUTY PHASE FROM         │     │
       │  CURRENT DETECTION       │     │
       │  VALUES OF REMAINING     │     │
       │      PHASES              │     │
       └─────────────────────────┘     │
             │                         ▼
             ▼                  ┌─────────────────────────┐
S49 ── ┌─────────────────────┐  │   OUTPUT CURRENT        │ ── S50
       │  SWITCH VALUE TO BE  │  │  DETECTION VALUES AS    │
       │  OUTPUT AS CURRENT   │  │  CURRENT VALUES OF      │
       │  VALUE OF MAXIMUM    │  │  RESPECTIVE PHASES      │
       │     DUTY PHASE       │  └─────────────────────────┘
       └─────────────────────┘          │
             │                          │
             ▼◄─────────────────────────┘
             │
             ▼
        ┌─────────┐
        │   END   │
        └─────────┘
```

<div align="center">

**INTERNATIONAL SEARCH REPORT**

</div>

| International application No. |
| --- |
| PCT/JP2019/012826 |

**A. CLASSIFICATION OF SUBJECT MATTER**
Int. Cl. H02M7/48(2007.01)i, B62D5/04(2006.01)i, B62D6/00(2006.01)i

According to International Patent Classification (IPC) or to both national classification and IPC

**B. FIELDS SEARCHED**

Minimum documentation searched (classification system followed by classification symbols)
Int. Cl. H02M7/00-7/98, B62D5/04, B62D6/00

Documentation searched other than minimum documentation to the extent that such documents are included in the fields searched
Published examined utility model applications of Japan     1922-1996
Published unexamined utility model applications of Japan   1971-2019
Registered utility model specifications of Japan           1996-2019
Published registered utility model applications of Japan   1994-2019

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| A | JP 2015-023755 A (MITSUBISHI ELECTRIC CORP.) 02 February 2015, entire text, all drawings (Family: none) | 1-4 |
| A | JP 2011-019378 A (JTEKT CORP.) 27 January 2011, entire text, all drawings & US 2011/0005855 A1, entire text, all drawings & EP 2273668 A2 & CN 101951212 A | 1-4 |
| A | JP 2003-164159 A (DENSO CORP.) 06 June 2003, entire text, all drawings & DE 10255832 A1 & FR 2832871 A1 | 1-4 |
| A | JP 2009-001055 A (JTEKT CORP.) 08 January 2009, entire text, all drawings (Family: none) | 1-4 |

☐ Further documents are listed in the continuation of Box C.     ☐ See patent family annex.

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| 04.06.2019 | 18.06.2019 |

| Name and mailing address of the ISA/ Japan Patent Office 3-4-3, Kasumigaseki, Chiyoda-ku, Tokyo 100-8915, Japan | Authorized officer<br><br>Telephone No. |
| --- | --- |

Form PCT/ISA/210 (second sheet) (January 2015)

**EP 3 595 160 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 3674578 B